# EUROPEAN PATENT APPLICATION

(11) **EP 4 597 359 A1**
(43) Date of publication of application: **06.08.2025**
(21) Application number: 24155412.0
(22) Date of filing: 01.02.2024
(51) Int. Cl.: G06K 19/07, G06K 19/073

(54) **METHOD, COMPUTER PROGRAM, CHIP MODULE FOR ENABLING AND/OR DISABLING AN OPERATIONAL MODE OF A PORTABLE DATA CARRIER AND PORTABLE DATA CARRIER COMPRISING SAME**

(71) Applicant: Giesecke+Devrient ePayments GmbH, 81677 München (DE)
(72) Inventor: Gatiragas, Alex, 81677 München (DE); Latorre, Azalya, 81677 München (DE)
(74) Representative: LKGLOBAL Lorenz & Kopf Patentanwalt Attorney at Law PartG mbB

(57) **Abstract**

A method for enabling and/or disabling an operational mode (M) of a portable data carrier (1), a computer program (20) for operating a portable data carrier (1), a chip module (3) for a portable data carrier (1), and a portable data carrier (1), in particular a transaction card, configured to carry out a respective method, are provided, the method comprising the steps of sensing (N2) a current movement (C) of the data carrier (1); comparing (N3) the current movement (C) to a predefined movement pattern (P); determining (N4) whether there is a sufficient match between the current movement (C) and the predefined movement pattern (P); and enabling (N5) and/or disabling the operational mode (M) in the event of that the sufficient match is being determined.

## Description

### Technical Field

The present disclosure relates to the field of controlling chip cards or other portable data carriers comprising an electronic chip module. In particular, the present disclosure relates to a method for enabling and/or disabling an operational mode of a portable data carrier, in particular a transaction card, a computer program for operating a portable data carrier, in particular a transaction card, a chip module for a portable data carrier, in particular a transaction card, and a portable data carrier, in particular a transaction card.

### Background of the Invention

Chip cards, also known as portable data carriers, are known from the state of the art, and can be used, for example, for cashless payment of goods or services, for personal identification and/or for access to Internet-based application programs. Accordingly, there are, for example, card-shaped data carriers in the form of chip cards in general, payment cards, such as credit cards or debit cards, as well as ID cards or identity cards. Such chip cards usually have a card body carrying a chip module comprising an electronic circuit with an electronic component, such as an integrated chip, which can be accessed in order to read data from it and based on this, allow a legitimate owner of the data carrier to perform and/or authorize a specific action, such as a transaction, in particular a financial transaction. Certain functions of the chip card may be carried out in a contactless manner through an antenna element embedded in the card body and connected to the chip module, so that the chip module may be accessed in a contactless manner, for example, by a corresponding terminal, such as a payment terminal, via near field communication (NFC).

DE 10 2009 011 821 A1, for example, deals with a carrier having a chip module including a chip with an integrated switching circuit, wherein a transponder antenna is attached to the module. The antenna is provided for contactless communication of the carrier. A magnetic element, e.g., magnetic film, produces magnetic field. A switching element, e.g., reed-switch, is provided on the chip in the module and actuated by the magnetic field. The switching element is switched such that the contactless communication of the carrier by the antenna is deactivated during actuating the switching element by the magnetic field.

DE 10 2007 009 216 A1 describes a data carrier having a contactless communication unit for performing a contactless communication and comprising a processor connected with an antenna. A shield prevents a contact-less communication with the communication unit in a state and is transported by a user of the data carrier and enables contactless communication with the communication unit, in another state. The shield is designed in such a manner that it enables the contactless communication through the shield in the latter state. A method for controlling a state transition of a shield in a portable data carrier is also disclosed.

DE 102 21 496 A1 describes a portable data carrier having an active electronic component, an electric connecting line for activating the component, and a manually activated switch on one edge of the card. The switch is provided as a perforation through the data carrier bordering on the two terminals of the connecting line and allows a part of the data carrier lying between the perforation and the edge to be shifted relative to another part adjacent to the perforation so that both terminals electrically join the connecting line.

EP 1 303 835 B1 relates to a portable data carrier comprising a display device. Said data carrier also comprises a microprocessor; memory units which are assigned to the microprocessor; data display means which are stored in the memory units assigned to the microprocessor; a display control unit for controlling the display means; and an energy supply unit which supplies at least the display unit and the control unit thereof with energy. The aim of the invention is to improve one such data carrier by reducing the power consumption of the display unit. This can be achieved by a non-volatile memory which is arranged separately from the microprocessor and the memory unit thereof, said memory being assigned to the control unit of the display means, and containing data provided for the display.

Chip cards, for example, transaction cards, according to the prior art, as described above, may not fully satisfy all requirements regarding operability and at the same time longevity. The described switching functionalities according to the prior art may only provide rather rudimentary switching operations, like connecting or disconnecting the antenna element. Adjustments to the set-up of the chip card and its functionality may require specific requests by the user to be submitted to the card issuing entity, such as a government agency, bank and/or a credit card company, or at least may require that the chip card is inserted into a certified device, such as a cash machine, or alike, in order to be able to use a PIN pad or keyboard to enter and read out information or data.

Furthermore, if exposed to certain mechanical impacts or over time, as well as due to reoccurring bending and pressure applied to the chip card, the mechanical switching elements may be damaged and therefore not last as long as desired. For example, a typical or standard use period of a chip card configured as a transaction card is 3 to 8 years, the end of which may not be reached if the switching element or any connection between the switching element and the chip module or the card body is damaged due to everyday use in such a way that it renders the chip card dysfunctional at least in part.

### Summary of the Invention

It may thus be seen as an object to provide chip cards which allow an improved control of their functionality and that can be used until the end of their respective standard use period and preferably beyond. In particular, it may be seen as an object to improve user friendliness and versatility of chip cards, without compromising their electrical and/or mechanical stability. These objects are at least partly achieved by the subject-matter of the independent claims.

According to an aspect, a method for enabling and/or disabling an operational mode of a portable data carrier, in particular a transaction card, is provided, the method comprising the steps of sensing a current movement of the data carrier; comparing the current movement to a predefined movement pattern; determining whether there is a sufficient match between the current movement and the predefined movement pattern; and enabling and/or disabling the operational mode in the event of that the sufficient match is being determined.

According to an aspect, a computer program for operating a portable data carrier, in particular a transaction card, is provided, comprising instructions which, when the program is executed by a computing device, cause the computing device to carry out a corresponding method.

According to an aspect, a chip module for a portable data carrier, in particular a transaction card, is provided, configured to carry out a corresponding method and/or having stored thereon a corresponding computer program.

According to an aspect, a portable data carrier, in particular a transaction card, is provided, configured to carry out a corresponding method, having stored thereon a corresponding computer program, and/or comprising a corresponding chip module.

The operational mode can be enabled without mechanically operating any electrical switch or alike. The step of enabling may involve a step of checking, whether the ability to control the portable data carrier by respective movements is permitted and/or enabled. The chip module may comprise respective computing device and/or data storage module which may be configured to carry out the respective method and/or computer program.

The proposed solution has the advantage over the prior art, that the operational mode of the data carrier may be enabled and/or disabled by a user or customer without the need of contacting any provider of the data carrier, or alike. With other words, the customer may directly control a function or set-up of the data carrier by carrying out respective for controlling the data carrier, no additional mechanical switches need to be implemented which helps in increasing the overall mechanic and/or electric stability of the data carrier and hence, its use period.

Further developments can be derived from the dependent claims and from the following description. Features described with reference to a data carrier and components, or elements thereof may be implemented as method steps, or vice versa. Therefore, the description provided in the context of the data carrier and its components applies in an analogous manner also to respective methods. Features and steps of a method relating to any kind of function or operation of the data carrier and of its components may be implemented as respective functional components or elements of the data carrier as well as of related devices which may be configured to interact with carrier.

According to a possible embodiment of a method, the step of sensing involves measuring an acceleration value representing at least one aspect of the current movement. The acceleration value may be measured respective measurement means. Speed values and/or distance values may be derived from the acceleration value, and vice versa, by means of respective integral and/or differential calculus. Thereby, the current movement can be reliably sensed and interpreted.

According to a possible embodiment of a method, the predefined movement pattern involves a single movement and/or a repetitive movement. The single movement could be involving a quick acceleration which may be caused by flicking, snapping and/or flipping the data carrier. The repetitive movement could involve shaking and/or rotating the data carrier. Different kind of movements may be combined as respective coherent choreographies. This helps in providing customisable movement patterns without desired degree of complexity for enabling and/or disabling the operational mode.

According to a possible embodiment of a method, the step of determining a sufficient match involves an assessment of whether the current movement lies within a certain movement threshold and/or whether a current graph representing the current movement sufficiently matches a pattern graph of the movement pattern. A gliding threshold and/or graph matching algorithm may be applied for determining the sufficient match. Thereby, the steps of comparing the current movement to the movement pattern and/or determining whether there is a sufficient match between them, may be executed with reasonable computational efforts, preferably without any delay or latency.

According to a possible embodiment of a method, enabling and/or disabling the operational mode switches the data carrier from one operational mode to another operational mode. The operational modes can refer to an active function of the deactivation of a function, such as freezing a certain functionality of the data carrier, or alike. For example, near field communication (NFC) capabilities of the data carrier may be frozen, i.e., disabled, to avoid so-called NFC skimming, i.e., any interception of a radio wave communication between the data carrier and a terminal device, or the simulation of a terminal device, for fraudulently accessing or misusing the data carrier. Consequently, the switching operation for changing operational modes may help to improve security of the data carrier and respective applications.

According to a possible embodiment of a method, the data carrier has at least two operational modes and enabling and/or disabling the operational mode cycles the data carrier through the at least two operational modes. Thereby, the customary may select any of the at least two operational modes as desired when using the data carrier. More than two operational modes may be implemented. Cycling through the operational modes offers a simple and reliable way of operating the data carrier.

According to a possible embodiment of a method, the operational mode relates to a specific transaction type, functional setup and/or procedural step. As transaction types, certain credit transactions, debit transactions and/or direct transfers, as well as respective currencies and/or valuables, including crypto currencies, may be selected. A functional setup may involve availability of NFC capabilities, as already mentioned above, locking and/or unlocking requirements, such as entering security pins, possibly via associated mobile devices, or alike. Procedural steps may involve any user input which may be required and/or awaited for performing the respective step of a process involved in an application of an/or executed on the data carrier, such as resetting a certain functionality, confirmations, repetitions, cancellations, abortions, etc. consequently, using operational modes as described herein helps in expanding functionality and versatility of the data carrier in a convenient manner.

According to a possible embodiment of a method, the method further comprises the step of showing and/or hiding a display icon associated with the operational mode on a card body of the data carrier. For example, a card validation code (CVV) on the back of the data carrier can be shown or hidden. A current operational mode, including transaction types and/or currencies can be displayed. This may help in enhancing user-friendliness as well as security of the data carrier.

According to a possible embodiment of a data carrier, the data carrier comprises an inertia measurement unit for measuring the current movement of the portable data-carrier. The inertial measurement unit can measure the current movement of the data carrier in at least one axis of movement. Alternatively, or additionally, the inertial measurement unit may measure the current movement in two or three axes of movement constituting a Cartesian coordinate system at least a dimension or plane therein. Thereby, the inertia measurement unit may help to measure acceleration, velocity and/or a distance performed by the current movement and may even help to record the movement pattern which thereby may be chosen or defined by a user. This helps in further enhancing user comfort and versatility of the data carrier.

According to a possible embodiment of a data carrier, comprising an electronic display device for displaying information regarding the operational state. The display device may be a non-volatile display, such as a bistable display, which may hold a certain information displayed without the need of being supplied by electrical energy. For example, the display device may use so-called e-ink for displaying respective information. The information may be displayed in the form of letters, icons, or alike. As already mentioned above, this may help in enhancing user-friendliness as well as security of the data carrier.

According to a possible embodiment of a data carrier, the data carrier comprises an energy storage device. The energy storage device may comprise a super capacitor and/or electric battery, or alike. This may help in providing sufficient energy for operating the data carrier as described herein, and may thus help in improving availability of respective functions.

According to a possible embodiment of a data carrier, the data carrier comprises an energy generation device. The energy generation device may comprise an induction coil, photovoltaic module, and/or mechanically driven electric generator along with a respective mechanical arrangement, for example, providing mechanical energy to the energy generation device by exploiting inertia and/or gravity effects. The induction coil, the data carrier and/or its energy storage device may be supplied with electrical energy through inductive chargers and/or NFC. The photovoltaic module allows for converting photonic energy into electrical energy. The mechanically driven electric generator allows for transforming mechanical energy into electrical power. Thereby, the energy generation device allows for sufficiently powering and thereby further improving availability of respective functions of the data carrier.

### Brief Description of the Drawings

- Fig. 1: is a schematic top view of a portable data carrier.
- Fig. 2: is a schematic diagram showing a comparison between a repetitive movement and a respective predefined movement pattern.
- Fig. 3: is a schematic diagram showing a comparison between a single movement and a further respective predefined movement pattern.
- Fig. 4: shows a schematic flow chart of steps of a method for enabling an/or disabling an operational mode of the portable data carrier.
- Fig. 5: shows a schematic flow chart with a plurality of operational modes.

### Detailed Description of Embodiments

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

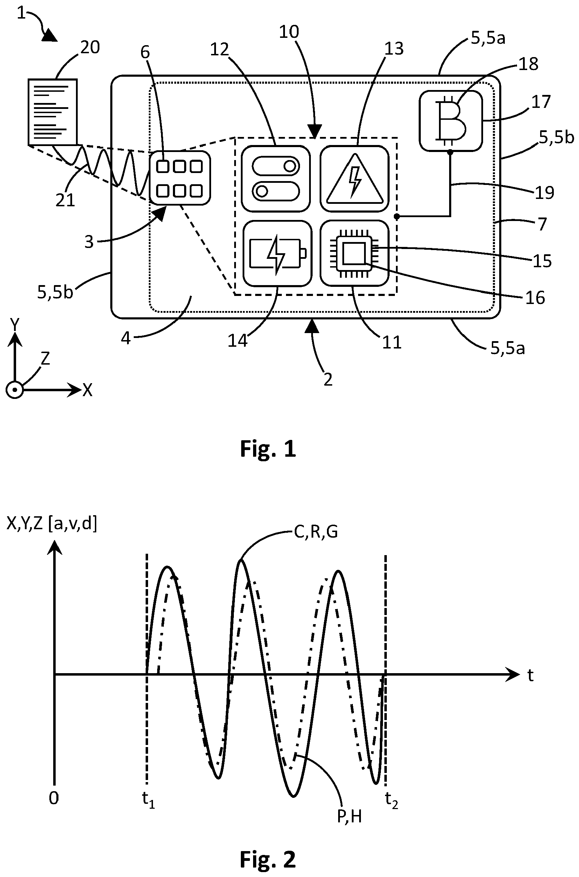

Fig. 1 shows a schematic top view of a portable data carrier 1, in the form of a chip card, comprising a card body 2 and a chip module 3. The data carrier 1 extends in a longitudinal direction X, a transverse direction Y, and a height direction Z, together forming a Cartesian coordinate system. A top face 4 of the chip card 1 faces in the height direction Z. Lateral side faces 5 of the data carrier1, namely, longitudinal side faces 5a and transverse side faces 5b, extent essentially in parallel to the longitudinal direction X and the transverse direction Y, respectively. The chip module 3 may be provided with electrical contact surfaces 6 as contact elements for establishing an electrical contact with the chip module 3 and any component thereof and/or connected thereto. An antenna element 7 can be electrically connected to the chip module 3 and/or to any component thereof or connected thereto for enabling wireless communication, for example, near field communication (NFC) with a respective terminal device (not shown).

A control arrangement 10 may be integrated into the card body 2 and/or the chip module 3. The control arrangement 10 may comprise a control unit 11, a switch unit 12, an energy storage device 13 and/or in energy generation device 14. The control arrangement 10 may further comprise or be connected to a movement measurement device 15, for example, comprising inertia measurement unit 16. In addition, the control arrangement 10 may further comprise or be connected to a display device 17 configured for displaying at least one icon 18. The display device 17 may be integrated into the card body 2, preferably such that an upper surface of the display device 17, is aligned with the top face 4 of the card body 2 and may be connected to the control arrangement 10 and/or any component thereof by means of at least one transmission line 19 for transmitting energy and/or information from and/or to the display device 17.

A computer program 20 for operating the data carrier 1 comprises instructions which may be executed by the control arrangement 10, in particular the control unit 11, which may comprise or be provided in the form of a computing device configured to carry out the instructions. The computer program 20 can at least in part be transferred to the control arrangement 10 as a data carrier signal 21 via the contact surfaces 6 and/or the antenna element 7. The computer program 20 are at least parts thereof may be transferred through the transmission line 19. The transmission line 19 or a number of transmission lines 19 may be provided desired or required to connect any of the parts and components of the data carrier 1, and in particular of the control arrangement 10, to each other.

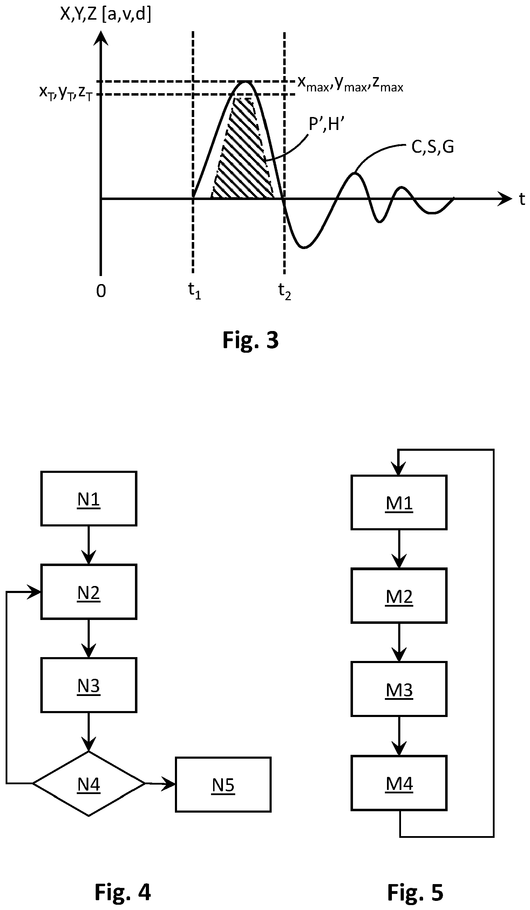

Fig. 2 is a schematic diagram showing a comparison between a current movement C in the form of a repetitive movement R of the data carrier 1 and a respective predefined movement pattern P or reference movement to be compared with the repetitive movement R which may be sensed and/or converted by means of the movement measurement device 15 as an acceleration value a, a velocity value v and/or a distance value d over time t in the longitudinal direction X, the transverse direction Y and/or the height direction Z, for example, between the first point of time ti and the second point of time ti. The repetitive movement R may be sensed to provide a current graph G to be compared to a pattern graph H representing the movement pattern P. For example, the repetitive movement R may be shaking movement and a number of times that the data carrier 1 is being shaken by user can be counted between the first point of time ti and the second point of time t₂, or alike, expressed in the form of the current graph G. If that number, which may be expressed by sinus-like repetitions, matches a respective number of repetitions expressed in the form of the pattern graph H, sufficient match between the current movement C and the movement pattern P can be detected by means of the control arrangement 10 which can then carry out the respective control action, such as enabling and/or disabling an operational mode M of the data carrier 1 (see Figs. 4 and 5).

Fig. 3 is a schematic diagram showing a comparison between a single movement S and a further respective predefined movement pattern P' which may take the form of a respective movement graph G' which could be defining an area, such as an integral, expressing a certain energy of the single movement S between the first point of time ti and the second point of time t₂, or alike. For example, a sufficient match between the current movement C and the movement pattern P' may be detected by means of the control arrangement 10, if an energy value of the single movement S exceeds that of the movement pattern P', in particular a pattern graph H' thereof, and/or if a maximum value of xₘₐₓ, yₘₐₓ, and/or zₘₐₓ of the current movement C exceeds the respective threshold value x_{T}, y_{T}, and/or z_{T} measured in the longitudinal direction X, the transverse direction Y, and/or the height direction Z, respectively.

Fig. 4 shows a schematic flow chart of steps N of method for enabling an/or disabling an operational mode M of the portable data carrier. In a first step N1, it may be determined whether an option to control the data carrier 1 by means of respective current movements C is enabled. If that option is enabled, then in a second step N2, a current movement C can be sensed, recorded and/or plotted, for example, the form of the current graph G. In a third step N3, the current movement C is being compared to the respective movement pattern P.

In a fourth step N4 it is being determined whether there is a sufficient match between the current movement C and the movement pattern P. If a sufficient match is given, the operational mode M of the data carrier 1 may be enabled and/or disabled, if not, it may be returned to step N2.

Fig. 5 shows a schematic flow chart with a number of the operational modes M. For example, the data carrier 1 may have for operational modes M1 to M4. In a first operational mode M1, the data carrier 1 may be locked to not allow any functions or transactions to be performed, for example in that the switch unit 12 switches off at least one of the contact surfaces 6 and/or the antenna element 7 or any function associated therewith. In a second operational mode M2, the data carrier may allow a respective credit transaction, such as a payment in a certain currency. In a third operational mode M3, the data carrier may allow credit transactions in another currency. In a fourth operational mode M3, the data carrier 1 may allow any other kind of transaction, such as debit transactions and/or trip to currency transactions, or alike. The fourth operational mode M, the data carrier 1 may return to the first operational mode M1, such that a user may circle further operational modes M, while it should be understood, that any desired and/or required number of operational modes M may be implemented.

### List of Reference Signs

- 1: data carrier / chip card
- 2: card body
- 3: chip module
- 4: top face
- 5: side face
- 5a: longitudinal side face
- 5b: transverse side face
- 6: contact surface / contact element
- 7: antenna element

- 10: control arrangement
- 11: control unit
- 12: switch unit
- 13: energy storage device
- 14: energy generation device
- 15: movement measurement device
- 16: inertia measurement unit
- 17: display device
- 18: icon
- 19: transmission line
- 20: computer program
- 21: data carrier signal

- a: acceleration value
- v: velocity value
- d: distance value
- t: time
- t₁: first point of time
- t₂: second point of time
- xₘₐₓ: maximum value (longitudinal direction)
- x_{T}: threshold value (longitudinal direction)
- yₘₐₓ: maximum value (transverse direction)
- y_{T}: threshold value (transverse direction)
- zₘₐₓ: maximum value (height direction)
- z_{T}: threshold value (height direction)

- C: current movement
- G: current graph
- H: pattern graph
- M: operational mode
- N: method step
- Q: single movement
- P, P': movement pattern / reference movement
- R: repetitive movement
- S: single movement
- T: threshold
- X: longitudinal direction
- Y: transverse direction
- Z: height direction

- M1: first operational mode
- M2: second operational mode
- M3: third operational mode
- M4: fourth operational mode

- N1: check movement control enablement
- N2: sense current movement
- N3: compare current movement to movement pattern
- N4: determined sufficient match
- N5: enable/disable operational mode

## Claims

1. Method for enabling and/or disabling an operational mode (M) of a portable data carrier (1), in particular a transaction card, the method comprising the steps of
sensing (N2) a current movement (C) of the data carrier (1);
comparing (N3) the current movement (C) to a predefined movement pattern (P);
determining (N4) whether there is a sufficient match between the current movement (C) and the predefined movement pattern (P); and
enabling (N5) and/or disabling the operational mode (M) in the event of that the sufficient match is being determined.

2. Method according to claim 1, wherein the step of sensing (N2) involves measuring an acceleration value (a) representing at least one aspect of the current movement (C).

3. Method according to claim 1 or 2, wherein the predefined movement pattern (P) involves a single movement (S) and/or a repetitive movement (R).

4. Method according to at least one of claims 1 to 3, wherein the step of determining (N4) a sufficient match involves an assessment of whether the current movement (C) lies within a certain movement threshold (T) and/or whether a current graph (G) representing the current movement (C) sufficiently matches a pattern graph (H) representing the movement pattern (C).

5. Method according to at least one of claims 1 to 4, wherein enabling and/or disabling the operational mode (M) switches the data carrier (1) from one operational mode (M) to another operational mode (M).

6. Method according to at least one of claims 1 to 5, wherein the data carrier (1) has at least two operational modes (M), and wherein enabling and/or disabling the operational mode (M) cycles the data carrier (1) through the at least two operational modes (M).

7. Method according to at least one of claims 1 to 5, wherein the operational mode (M) relates to a specific transaction type, functional setup and/or procedural step.

8. Method according to claims 1 to 7, further comprising the step of showing and/or hiding a display icon (18) associated with the operational mode (M) on a card body (2) of the data carrier (1).

9. Computer program (20) for operating a portable data carrier (1), in particular a transaction card, comprising instructions which, when the program is executed by a computing device, cause the computing device to carry out a method according to at least one of claims 1 to 8.

10. Chip module (3) for a portable data carrier (1), in particular a transaction card, configured to carry out a method according to at least one of claims 1 to 8 and/or having stored thereon a computer program (20) according to claim 9.

11. Portable data carrier (1), in particular a transaction card, configured to carry out a method according to at least one of claims 1 to 8, having stored thereon a computer program (20) according to claim 9, and/or comprising a chip module (3) according to claim 10.

12. Portable data carrier (1) according to claim 11, comprising an inertia measurement unit (16) for measuring the current movement (C) of the portable data-carrier (1).

13. Portable data carrier (1) according to claim 11 or 12, comprising an electronic display device (17) for displaying information regarding the operational Mode (M).

14. Portable data carrier (1) according to at least one of claims 11 to 13, comprising an energy storage device (13).

15. Portable data carrier (1) according to at least one of claims 11 to 14, comprising an energy generation device (14).
